# EUROPEAN PATENT SPECIFICATION

(11) **EP 4 084 952 B1**
(45) Date of publication and mention of the grant of the patent: **15.05.2024**
(21) Application number: 20853522.9
(22) Date of filing: 30.12.2020
(51) Int. Cl.: B32B 5/02, B32B 5/18, B32B 27/06, B32B 27/12, B32B 27/32, B32B 27/34, B32B 27/36, B32B 27/40

(54) **MULTI-LAYER THERMAL INSULATION BLANKET, OPERATION METHODS AND USES THEREOF**
MEHRSCHICHTIGE WÄRMEISOLIERUNGSDECKE, BETRIEBSMETHODEN UND VERWENDUNGEN DAVON
COUVERTURE D'ISOLATION THERMIQUE MULTICOUCHE, MÉTHODES D'OPÉRATION ET UTILISATIONS DE CELLES-CI

(30) Priority: 31.12.2019 PT 2019116040
(43) Date of publication of application: 09.11.2022
(73) Proprietor: Escola Superior de Enfermagem do Porto, 4200-072 Porto (PT); Santa Casa da Misericórdia do Porto, 4050-311 Porto (PT)
(72) Inventor: DO CARMO DIAS MOREIRA DE CARVALHO, Isaura, 4050-638 Porto (PT); ABELHA, Fernando, 4405-696 Vila Nova de Gaia (PT); FERNANDES CARVALHO, Miguel Ângelo, 4700-384 Braga (PT); MARTINS, Alzira Teresa, 4200-072 Porto (PT)
(74) Representative: Patentree
(86) International application number: PCT/IB2020/062553
(87) International publication number: WO 2021/137177

(56) References cited:
- DE-U1-202005 008 041
- US-A1- 2019 343 202

## Description

### TECHNICAL FIELD

The present disclosure relates to a multi-layer thermal insulation blanket, designed to protect the upper body, having as characteristics retaining the heat emitted by the patient and reusing it to keep the patient warm, namely to control and prevent Inadvertent Perioperative Hypothermia during surgery proceedings in the operating room.

### BACKGROUND

A problem present in the state of the art is that there are no known thermal insulation systems as effective as warming systems to control Inadvertent Perioperative Hypothermia.

An existing solution to this problem is the use of warming systems that use an external heat source to avoid lowering the patient's body temperature. The recommended system to use is the warmed forced air.

However, this existing solution is not able to promote the whole and continuous comfort of patient and surgical team.

Document CN109630811A discloses a wrapping process for a multi-layer heat-insulation blanket. The process comprises the concrete steps of before the multi-layer heat-insulation blanket is wrapped in cryogenic equipment, trepanning the surface of the multi-layer heat-insulation blanket, wherein the hole diameter is 3 to 6mm, and the distances between a hole and a boundary as well as holes are 150 to 200mm; baking the multi-layer heat-insulation blanket in a vacuum environment, wherein the baking temperature is 105 to 140 DEG C, and the baking time is not less than 4 hours; selecting different connecting methods according to the unit quantity of the multi-layer heat-insulation blanket and the cryogenic equipment; and moulding and protecting the wrapped multi-layer heat-insulation blanket through fiberglass mesh.

Document US6521077B1 discloses a method of insulating a member, such as a cryogenic tank, pipe, or other cryogenic or extreme temperature element with multilayer insulation, and a packaged multilayer insulation blanket for use in the method. The packaged blanket includes a multilayer insulation blanket including a plurality of alternating layers of aluminium or other heat-reflective foil and microfiber glass insulation spacer material, and two layers of plastic sheeting sandwiching the multilayer insulation blanket therebetween. Each layer of plastic sheeting has at least one edge which is sealed to thus define an evacuated inside space containing the multilayer insulation. In the method, the edge of the packaged insulation is opened and an edge of the multilayer insulation blanket therein is attached to the cryogenic tank, container or other member to be insulated. The multilayer insulation is then guided onto or around the member, and out from between the plastic sheeting until edges of the multilayer insulation abut. Lastly, the abutting edges of the multilayer insulation blanket are attached with an appropriate means such as heat reflective tape in a manner to avoid heat shorts.

The general technical background of the invention also includes US 2019/343202 A1 and DE 20 2005 008041 U1.

These facts are disclosed in order to illustrate the technical problem addressed by the present disclosure.

### GENERAL DESCRIPTION

The invention is defined by the multi-layer thermal insulation blanket as defined in claim 1. The present disclosure relates to a multi-layered blanket that may be used to protect patients and control the Inadvertent Perioperative Hypothermia. The multi-layered blanket of the present invention allows the hot air produced by the body patient to enter in the system that maintains the patient's temperature.

In an embodiment, the blanket of the present invention comprises three layers. The bottom comprises polypropylene, polyamide, and elastane, is the one in contact with the patient and it is very permeable and allows the heat produced by patient to enter in the system; the intermediate layer comprises polyester and retains the heat inside forming a warm air cushion that maintains the patient's temperature; finally, the top layer comprises polyester and polyurethane, is a water and air proof layer that prevents the outflow of hot air to the outside. Its external surface is completely flat, which allows the immediate removal of some fluid or blood leakage. The ergonomic shape of the blanket allows it to be more effective and more comfortable for the patient.

Protecting patients from the cold in the operating room is a complex problem that has encouraged the search for better and more effective thermal protection systems. Some disadvantages have been observed in the daily use of the recommended thermal protection system (warmed forced air). It causes frequent discomfort of patient and surgical team due to the heat emission and adjusting the temperature of the heat emitting device is often necessary; the low weight of the blanket and the high weight of the hot air inflation sleeve make the blanket unstable when placed over the patient's body; the increased occupation of space by equipment; the warming system is dependent of electric energy and maintenance which keeps it costly; it has no ecological concern, producing waste caused by single use consumables; it is an additional source of noise in a noisy place; it is difficult to clean equipment properly.

It was evaluated the effectiveness of the multi-layer thermal insulation blanket of the present disclosure, namely a three-layer thermal insulation system (blanket), comparing its effect with the warmed forced air system on temperature variation, shivering incidence and comfort perception, in patients undergoing total knee arthroplasty under neuraxial anaesthesia, during their stay in the operating room.

Hypothermia, defined as a core body temperature less than 36 °C, is a relatively common occurrence in the unwarmed surgical patient (or unheated surgical patient). A mild degree of inadvertent perioperative hypothermia can be associated with significant morbidity and mortality. A threefold increase in the frequency of surgical site infections is reported in colorectal surgery patients who experience perioperative hypothermia.

The multi-layer thermal insulation blanket of the present disclosure is different from the prior art at least because comprises a combination of three specific layers made of existing textile fabrics. The combination of layers of the multi-layer thermal insulation blanket, make it effective on keeping the patient's body temperature. Also, its ergonomic structure is an innovation.

One of the advantages in respect of the prior art include being ergonomic, being washable and reusable (ecologic concern).

The multi-layer thermal insulation blanket of the present disclosure does not depend on electrical energy; doesn't make noise and it works without extra space occupation.

The multi-layer thermal insulation blanket of the present disclosure protects the patient's shoulders and harms in a complete way.

The multi-layer thermal insulation blanket of the present disclosure can be to be used in environments without electricity and extreme situations such as field hospitals or developing countries.

An aspect of the present disclosure relates to a multi-layer thermal insulation blanket comprising:
a top layer comprising polyester and polyurethane for comfort;
an intermediate layer comprising polyester for warming;
a bottom layer comprising polypropylene, polyamide and elastane for insulation;
wherein the layers are overlapped to each other;
preferably wherein the edges layers are bound for avoid undesirable heat transfer.

In an embodiment, the seams of the sandwich structure may comprise an in-fold of the layers, preferably a lapped seam.

In an embodiment, the top layer comprises 70-80% (wt/wt) polyester and 20-30 % (wt/wt) polyurethane.

In an embodiment, the intermediate layer is polyester.

In an embodiment, the thickness of the blanket is between 2 - 5 mm, preferably 2,5 - 4,5 mm; more preferably 3 - 4 mm.

In an embodiment, the weight of the blanket per area varies between 600-800 gr, preferably between 650-700 gr.

In an embodiment, the intermediate layer is polyester. Preferably, the intermediate layer is a polyester fiber, polyester foam or mixtures thereof.

In an embodiment, the blanket may have a circular aperture near a lateral hedge to fit the patient head.

In an embodiment, the blanket may have two sleeves with a closure system to maintain the arms temperature.

It was evaluated in a blinded randomized clinical trial which took place in the operating room of an hospital in the north of Portugal, the effectiveness the multi-layer thermal insulation blanket of the present disclosure in a perioperative context. Participants were patients aged over 18 years, with the diagnosis of gonarthrosis, to undergo total elective knee arthroplasty, under neuraxial anaesthesia. They were randomly assigned to the experimental group (EG) (n = 65) or control group (CG) (n = 59). The experimental group received as a skin protection the multi-layer thermal insulation blanket of the present disclosure, placed during the entire intraoperative phase. The control group received the usual system internationally recommended (warmed forced air system). The tympanic temperature, thermal comfort visual perception and shivering were assessed in six different times during the intraoperative phase. The general and thermal dimensions of comfort were evaluated thirty minutes after beginning surgery (T4). Aspects of ergonomic comfort have also been assessed. Significant differences were found between groups, relative to the mean age, body mass index and diastolic blood pressure. Shivering was not observed. Differences in mean temperature variation and thermal comfort visual perception were not statistically significant between groups in the six evaluation times. The values of the thermal comfort scales scores and perioperative comfort also didn't show statistically significant differences. The multi-layer thermal insulation blanket of the present disclosure has proven to be more ergonomic than the usual system.

The results suggest that the multi-layer thermal insulation blanket of the present disclosure developed has a similar effect to the warmed forced air system, temperature variation and intraoperative comfort perception, indicating that it is suitable for use in the perioperative context. Given its simplicity and the fact that it's not dependent on any external heat source, the multi-layer thermal insulation blanket of the present disclosure is a viable option for perioperative protection in developing countries or field hospitals.

### BRIEF DESCRIPTION OF THE DRAWINGS

The following figures and tables provide preferred embodiments for illustrating the description and should not be seen as limiting the scope of invention.
**Figure 1A****:** Schematic representation of a top view and perspective view of the embodiment.
**Figure 1B****:** Schematic representation of a lateral view of the previous embodiment.
**Figure 1C****:** Schematic representation of a cross sectional view of an exemplary embodiment of the present blanket.
**Figure 2****:** Schematic representation of a perspective view of the previous embodiment and functioning.
**Figure 3****:** Schematic representation of the ergonomic of the blanket and its measures.
**Figure 4****:** Graphic representation of the air permeability of top and intermediate layers.
**Figure 5****:** Graphic representation of the thermal conductivity of bottom layers.

**Table 1: Thermal Insulation of sets of three layers.**

| Table 1 - Thermal Insulation (Clo) | | |
|---|---|---|
| | Clo | |
| Type | SERIAL | PARALLEL |
| 1 | 2.639 | 1.374 |
| 2 | 2.845 | 1.412 |
| 3 | 2.684 | 1.374 |
| 4 | 3.187 | 1.516 |
| 5 | 2.380 | 1.296 |
| 6 | 3.522 | 1.561 |
| 7 | 2.935 | 1.419 |
| 8 | 2.477 | 1.322 |

**Table 2: Sample Characteristics**

| **Variable** | **Experiment Group (n=65)** | **Control Group (n=59)** | **t(df)** | ***p*** |
|---|---|---|---|---|
| | Mean (SD) | Mean (SD) | | |
| Age | 70.18 (8.10) | 66.90 (6.71) | 2.468 (122) | 0.015 |
| Nº Comorbidity | 1.58 (1.07) | 1.50 (0.95) | 0.508 (122) | ns |
| Scholarity | 4.60 (2.18) | 4.24 (2.05) | 0.953 (122) | ns |
| BMI | 28.95 (4.16) | 30.76 (4.10) | 2.432 (122) | 0.016 |
| Fasting hours | 11.40 (1.80) | 11.61 (2.03) | 1.371 (122) | ns |
| Systolic BP | 142.40 (18.14) | 142.20 (14.89) | 0.072 (122) | ns |
| Diastolic BP | 80.77 (9.92) | 75.92 (11.66 | 2.504 (122) | 0.014 |
| Heart rate | 69.52 (10.37) | 69.07 (7.22) | 0.286 (122) | ns |
| O₂ Saturation | 97.29 (1.72) | 97.47 (1.28) | 0.664 (122) | ns |
| Surgery time (min) | 72.46 (13.59) | 69.32 (12.40) | 1.339 (122) | ns |
| | Number (%) | Number (%) | | |
| Female (number %) | 55 (84.6) | 48 (81.4) | | ns |
| ASA Classification | | | | |
| I | 4 (6.2) | 3 (5.1) | | ns |
| II | 61 (93.8) | 51 (93.2) | | ns |
| III | 0 (0) | 1 (1.7) | | ns |

| | | | | |
|---|---|---|---|---|
| SD - Standard Deviation; ASA - American Society of Anaesthesiologists; df - degrees of freedom | | | | |

**Table 3: Temperature Variation and Thermal Comfort Visual Perception**

| | **Experiment Group (n=65)** | **Control Group (n=59)** | **t(df)** | ***p*** |
|---|---|---|---|---|
| | M(SD) | M(SD) | | |
| Temperature | | | | |
| T1 | 36.59 (0.22) | 36.59 (0.26) | 0.026 (122) | ns |
| T2 | 36.34 (0.20) | 36.33 (0.22) | 0.820 (122) | ns |
| T3 | 36.28 (0.18) | 36.30 (0.20) | 0.221 (122) | ns |
| T4 | 36.27 (0.17) | 36.29 (0.21) | 0.615 (122) | ns |
| T5 | 36.25 (0.16) | 36.32 (0.20) | 1.869 (122) | ns |
| T6 | 36.28 (0.19) | 36.35 (0.22) | 1.963 (122) | ns |

| Visual perception of the thermic comfort | | | | |
|---|---|---|---|---|
| T1 | 4.80 (0.44) | 4.90 (0.31) | 1.456 (122) | ns |
| T2 | 5.00 (0.00) | 4.95 (0.22) | 1.176 (122) | ns |
| T3 | 5.00 (0.00) | 5.00 (0.00) | - | ns |
| T4 | 4.97 (0.25) | 5.05 (0.22) | 1.925 (122) | ns |
| T5 | 5.00 (0.00) | 4.98 (0.13) | 1.000 (122) | ns |
| T6 | 5.00 (0.00) | 5.00 (0.00) | - | ns |

| | | | | |
|---|---|---|---|---|
| M - Mean; SD - Standard Deviation; df-degrees of freedom | | | | |

**Table 4: Thermal Comfort Scale scores**

| | **Experiment Group (n=65)** | **Control Group (n=59)** | **t(df)** | ***p*** |
|---|---|---|---|---|
| | M(SD) | M(SD) | | |
| Physical Dimension | 26.75 (2.39) | 27.25 (2.23) | 1.203 (122) | ns |
| Emotional Dimension | 12.27 (1.51) | 12.78 (1.19) | 0.293 (122) | ns |
| Total | 39.46 (3.59) | 40.03 (2.88) | 0.974 (122) | ns |

| | | | | |
|---|---|---|---|---|
| TCS - thermic comfort scale; M - Mean; SD - Standard Deviation; df -degrees of freedom | | | | |

**Table 5: Perioperative Comfort Scale scores**

| | **Experiment Group (n=65)** | **Control Group (n=59)** | **t(df)** | ***p*** |
|---|---|---|---|---|
| | M(SD) | M(SD) | | |
| Relieve | 25.89 (2.19) | 26.41 (2.59) | 1.199 (122) | ns |
| Ease | 16.71 (2.18) | 16.86 (1.85) | 0.429 (122) | ns |
| Transcendency | 21.09 (2.02) | 21.47 (1.99) | 1.061 (122) | ns |
| Total | 59.12(5.44) | 60.20(5.06) | 1.141(122) | ns |

| | | | | |
|---|---|---|---|---|
| TCS - thermic comfort scale; M - Mean; SD - Standard Deviation; df -degrees of freedom | | | | |

**Table 6: Comparison of Ergonomic Comfort between groups**

| | **Experiment Group (n=65)** | **Control Group (n=59)** | **t(df)** | ***p*** |
|---|---|---|---|---|
| | M(SD) | M(SD) | | |
| Body adjustment | 4.40 (0.55) | 4.10 (0.58) | 2.928 (122) | 0.04 |
| Weight | 4.46 (0.50) | 4.31 (0.50) | 1.376 (122) | ns |
| Neck comfort | 4.43 (0.50) | 4.03 (0.59) | 4.039 (122) | 0.0001 |
| Arm comfort | 4.45 (0.50) | 4.03 (0.59) | 4.340 (122) | 0.0001 |
| Abdomen comfort | 4.43 (0.50) | 4.15 (0.49) | 3.148 (122) | 0.02 |
| All zones comfort | 4.45 (0.50) | 4.19 (0.47) | 2.786 (122) | 0.04 |
| Touch | 4.38 (0.49) | 4.15 (0.41) | 2.876 (122) | 0.005 |
| Inner layer texture | 4.46 (0.50) | 4.12 (0.42) | 4.142 (122) | 0.0001 |
| Colour | 4.32 (0.53) | 4.27 (0.49) | 0.567 (122) | ns |
| Shape | 4.43 (0.53) | 4.07 (0.53) | 3.799 (122) | 0.0001 |

| | | | | |
|---|---|---|---|---|
| M - Mean; SD - Standard Deviation; df-degrees of freedom | | | | |

### DETAILED DESCRIPTION

The present disclosure relates to a multi-layer thermal insulation blanket, designed to protect the upper body, having as characteristics retaining the heat emitted by the patient and reusing it to keep the patient warm, namely to control or prevent Inadvertent Perioperative Hypothermia during surgery proceedings in the operating room.

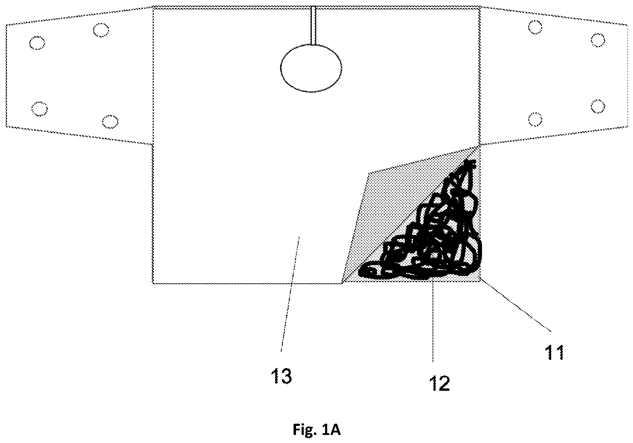

**Figure 1A** shows a schematic representation of a top and perspective view of the complete blanket where: **11** represents the bottom layer, **12** represents the intermediate layer, and **13** represents the top layer.

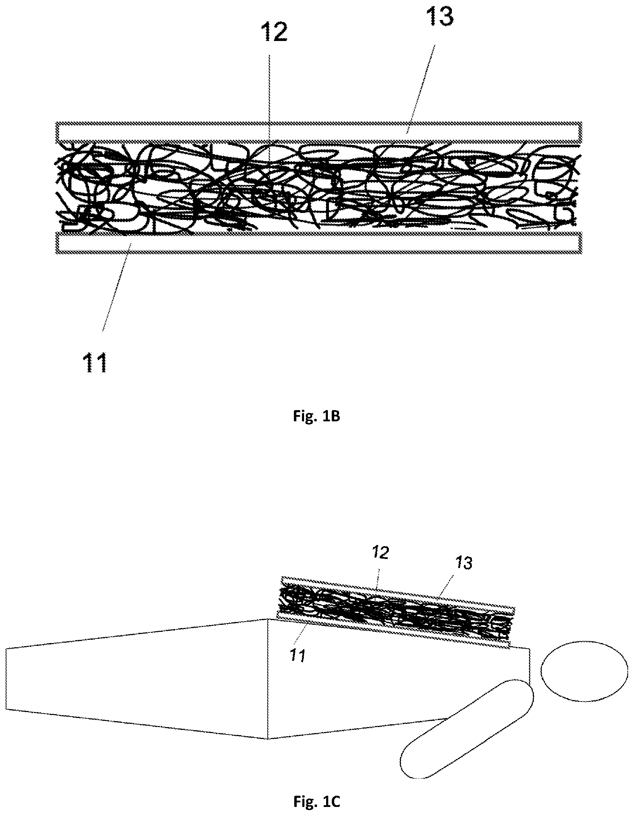

**Figure 1B** shows a schematic representation of a lateral view of the three layers.

**Figure 1C** shows a cross sectional view of the layers of the blanket, applicated to the patient.

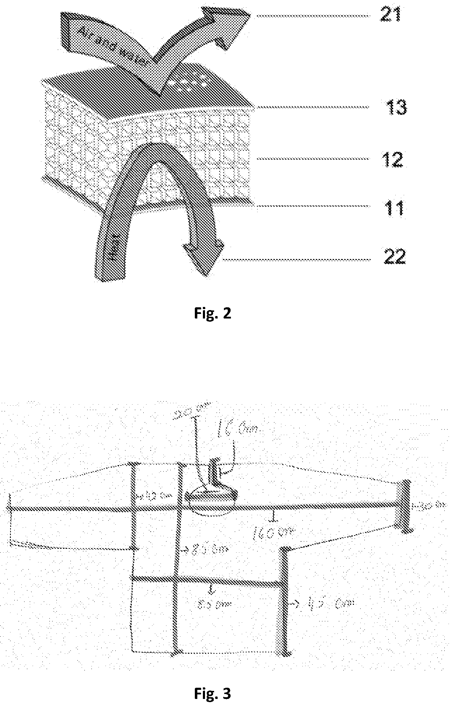

**Figure 2** shows a schematic representation of a perspective view of the three layers and its functioning: the air and water movement **21** and the heat movement **22.**

In order to assess the thermal properties of the textile materials, tests were made with all the samples: one top layer, one intermediate layer and eight different fabrics to choose the bottom layer. In the first phase, the Air Permeability was tested in the bottom and intermediate layers. Thermal Conductivity (property that provide the hot / cool sensation) was tested in the bottom layers, to find the more comfortable one. In the second phase, the Thermal Insulation capacity of sets of three layers was tested. Two different models were used to calculate the results of the Thermal Insulation tests (Serial Model and Parallel Model).

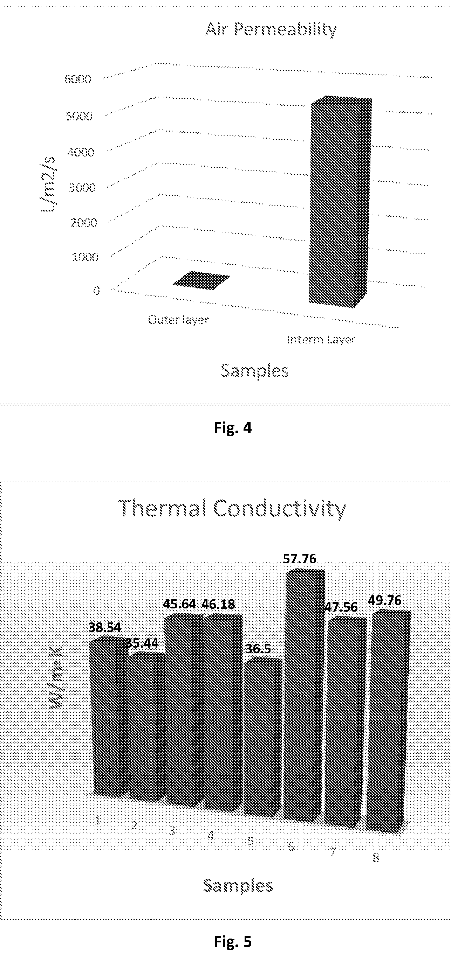

The results of testing Air Permeability show that the top layer permeability is very low, whereas that of the intermediate layer is very high, as expected (**Figure 4**). Relative to the bottom layers, the results suggest that the best results in terms of Thermal Conductivity were for the sample of polypropylene, polyamide and elastane as shown in **Figure 5****.** The set of three layers comprised of the polypropylene, polyamide and elastane bottom layer showed the best results in terms of Thermal Insulation as shown in Figure 5. This set was chosen for the structure of the present blanket.

The following data compared the effectiveness of the three-layered thermal insulation blanket of the present disclosure versus the traditional thermal body protection (warmed forced air system) for patients under total knee arthroplasty, during the intraoperative phase.

| Randomized Controlled Study | Intervention/treatment |
|---|---|
| Control Group (n=59) | Warmed forced air system |
| Intervention Group (n=65) | Three layered thermal insulation blanket of the present disclosure |

Participants were randomly assigned to the experimental group or control group. The experimental group received as a skin protection the three-layer thermal insulation blanket of the present disclosure and the control group received the usual recommended system (warmed forced air).

Both blankets were placed at the entrance to the operating room and held on patients during the entire intraoperative phase.

In order to understand the variation of the study variables, and their relation to the baseline values (T1), measured at the entrance of the surgical department, the tympanic temperature, the visual perception of thermal comfort and shivering were evaluated at different moments until the exit of the operating room.

In addition, thermal and general subjective dimensions of perioperative comfort were evaluated, thirty minutes after beginning surgery (T4). Aspects of ergonomic comfort have also been assessed.

The results have shown significant differences were found between groups, relative to the mean age (EG - 70.18 SD 8.10, CG - 66.90 SD 6.71, p = 0.015), body mass index (EG - 28.95 SD 4.16, CG - 30.76 SD 4.10, p = 0.016) and diastolic blood pressure (EG - 80.77 SD 9.92, CG - 75.92 SD 11.66, p = 0.014) **Figure 6.** Shivering was not observed. Differences in mean temperature variation and thermal comfort visual perception were not statistically significant between groups (p <0.0001) in the six evaluation times as shown in **Table 3.** The values of the thermal comfort scales scores (EG - 39.46 SD 3.59, CG - 40.03 SD 2.88, p> 0.05) as shown in **Table 4,** and perioperative comfort (EG - 59.12 SD 5.44, CG - 60.20 SD 5.06, p> 0.05), as shown in **Table 5,** also didn't show statistically significant differences. The new system has proven to be more ergonomic than the usual system. The results suggest that the three-layer insulation system developed has a similar effect to the warmed forced air system, temperature variation and intraoperative comfort perception, indicating that it is suitable for use in the perioperative context.

The term "comprising" whenever used in this document is intended to indicate the presence of stated features, integers, steps, components, but not to preclude the presence or addition of one or more other features, integers, steps, components or groups thereof. The disclosure should not be seen in any way restricted to the embodiments described and a person with ordinary skill in the art will foresee many possibilities to modifications thereof.

The above described embodiments are combinable. The following claims further set out particular embodiments of the disclosure.

## Claims

1. Multi-layer thermal insulation blanket comprising:
a top protective layer (13) comprising polyester and polyurethane for comfort;
an intermediate layer (12) comprising polyester for warming;
a bottom layer (11) comprising polypropylene, polyamide and elastane for insulation;
wherein the layers are overlapped to each other to form a sandwich structure;
wherein the borders of sandwich structure are seal by a seam.

2. Thermal insulation blanket according to claim 1, wherein seams of the sandwich structure comprise an in-fold of the layers, preferably a lapped seam.

3. Thermal insulation blanket according to any of the previous claims comprising:
a top protective layer (13) consisting polyester and polyurethane for comfort;
an intermediate layer (12) consisting polyester for warming;
a bottom layer (11) consisting polypropylene, polyamide and elastane for insulation;
wherein the layers are overlapped to each other to form a sandwich structure.

4. Thermal insulation blanket according to any of the previous claims, wherein the thickness of the blanket is between 2 - 5 mm, preferably 2,5 - 4,5 mm; more preferably 3 -4 mm.

5. Thermal insulation blanket according to any of the previous claims, wherein the weight of the blanket per area varies between 600-800 gr/m², preferably between 650-700 gr/m².

6. Thermal insulation blanket according to any of the previous claims, wherein the top layer (13) comprises 70 - 80%(wt/wt) polyester and 20 - 30 % (wt/wt) polyurethane.

7. Thermal insulation blanket according to any of the previous claims wherein the intermediate layer (12) is polyester.

8. Thermal insulation blanket according to any of the previous claims wherein the intermediate layer (12) is a polyester fiber, polyester foam or mixtures thereof.

9. Thermal insulation blanket according to any of the previous claims, wherein the blanket has a circular aperture near a lateral hedge to fit the patient head.

10. Thermal insulation blanket according to any of the previous claims, wherein the blanket has two sleeves with a closure system to maintain the arms temperature.

## Patentansprüche

1. Mehrschichtige Wärmeisolierungsdecke, umfassend:
eine obere Schutzschicht (13), umfassend Polyester und Polyurethan für den Komfort;
eine Zwischenschicht (12), umfassend Polyester zum Wärmen;
eine untere Schicht (11), umfassend Polypropylen, Polyamid und Elastan zur Isolierung;
wobei die Schichten einander überlappen, um eine Schichtstruktur zu bilden;
wobei die Ränder der Schichtstruktur durch eine Naht versiegelt sind.

2. Wärmeisolierungsdecke nach Anspruch 1, wobei die Nähte der Schichtstruktur eine Umhüllung der Schichten, bevorzugt eine überlappte Naht, umfassen.

3. Wärmeisolierungsdecke nach einem der vorangehenden Ansprüche umfassend:
eine obere Schutzschicht (13) bestehend aus Polyester und Polyurethan für den Komfort;
eine Zwischenschicht (12), bestehend aus Polyester zum Wärmen;
eine untere Schicht (11) bestehend aus Polypropylen, Polyamid und Elastan zur Isolierung;
wobei die Schichten einander überlappen, um eine Schichtstruktur zu bilden.

4. Wärmeisolierungsdecke nach einem der vorangehenden Ansprüche, wobei die Dicke der Decke zwischen 2 - 5 mm, bevorzugt 2,5 - 4,5 mm; besonders bevorzugt 3 - 4 mm beträgt.

5. Wärmeisolierungsdecke nach einem der vorangehenden Ansprüche, wobei das Gewicht der Decke pro Fläche zwischen 600-800 g/m², bevorzugt zwischen 650-700 g/m² variiert.

6. Wärmeisolierungsdecke nach einem der vorangehenden Ansprüche, wobei die Oberschicht (13) 70 - 80 % (Gew./Gew.) Polyester und 20 - 30 % (Gew./Gew.) Polyurethan umfasst.

7. Wärmeisolierungsdecke nach einem der vorangehenden Ansprüche, wobei die Zwischenschicht (12) aus Polyester besteht.

8. Wärmeisolierungsdecke nach einem der vorangehenden Ansprüche, wobei die Zwischenschicht (12) eine Polyesterfaser, Polyesterschaum oder Mischungen davon ist.

9. Wärmeisolierungsdecke nach einem der vorangehenden Ansprüche, wobei die Decke eine kreisförmige Öffnung in der Nähe eines seitlichen Randes aufweist, um sich an den Kopf des Patienten anzupassen.

10. Wärmeisolierungsdecke nach einem der vorangehenden Ansprüche, wobei die Decke zwei Ärmel mit einem Verschlusssystem aufweist, um die der Temperatur der Arme aufrechtzuerhalten.

## Revendications

1. Couverture d'isolation thermique multicouche comprenant :
une couche protectrice supérieure (13) comprenant du polyester et du polyuréthane pour le confort ;
une couche intermédiaire (12) comprenant du polyester pour réchauffer ;
une couche inférieure (11) comprenant du polypropylène, du polyamide et de l'élasthanne pour l'isolation ;
dans laquelle les couches sont superposées pour former une structure en sandwich ;
dans laquelle les bords de la structure en sandwich sont scellés par une couture.

2. Couverture d'isolation thermique selon la revendication 1, dans laquelle les coutures de la structure en sandwich comprennent un repli des couches, préférablement une couture superposée.

3. Couverture d'isolation thermique selon l'une quelconque des revendications précédentes comprenant :
une couche protectrice supérieure (13) consistant en polyester et polyuréthane pour le confort ;
une couche intermédiaire (12) consistant en polyester pour réchauffer ;
une couche inférieure (11) consistant en polypropylène, polyamide et élasthanne pour l'isolation ;
dans laquelle les couches sont superposées pour former une structure en sandwich.

4. Couverture d'isolation thermique selon l'une quelconque des revendications précédentes, dans laquelle l'épaisseur de la couverture est située entre 2 et 5mm, préférablement 2,5 et 4,5mm ; plus préférablement 3 et 4mm.

5. Couverture d'isolation thermique selon l'une quelconque des revendications précédentes, dans laquelle le poids de la couverture par zone varie entre 600 et 800gr/m², préférablement entre 650 et 700gr/m².

6. Couverture d'isolation thermique selon l'une quelconque des revendications précédentes, dans laquelle la couche supérieure (13) comprend 70-80% (poids/poids) de polyester et 20-30% (poids/poids) de polyuréthane.

7. Couverture d'isolation thermique selon l'une quelconque des revendications précédentes dans laquelle la couche intermédiaire (12) est en polyester.

8. Couverture d'isolation thermique selon l'une quelconque des revendications précédentes dans laquelle la couche intermédiaire (12) est une fibre de polyester, une mousse de polyester ou des mélanges de ceux-ci.

9. Couverture d'isolation thermique selon l'une quelconque des revendications précédentes, dans laquelle la couverture a une ouverture circulaire près d'une protection latérale pour s'ajuster à la tête du patient.

10. Couverture d'isolation thermique selon l'une quelconque des revendications précédentes, dans laquelle la couverture a deux manches avec un système de fermeture pour maintenir la température des bras.
